# EUROPÄISCHE PATENTSCHRIFT

(11) **EP 1 079 933 B1**
(45) Veröffentlichungstag und Bekanntmachung des Hinweises auf die Patenterteilung: **12.07.2006**
(21) Anmeldenummer: 00912381.1
(22) Anmeldetag: 18.02.2000
(51) Int. Cl.: B03B 5/00, B03B 5/48, B03B 11/00, B03B 5/66, B01D 21/02, B01D 21/24

(54) **SEPARATION VON AUS ORGANISCHEM UND ANORGANISCHEM MATERIAL ZUSAMMENGESETZTEN FESTSTOFFEN**
SEPARATION OF SOLIDS CONSISTING OF ORGANIC AND INORGANIC MATERIAL
SEPARATION DE MATIERES SOLIDES COMPOSEES DE MATIERE ORGANIQUE ET DE MATIERE INORGANIQUE

(30) Priorität: 18.02.1999 DE 19906731; 26.05.1999 DE 19924164
(43) Veröffentlichungstag der Anmeldung: 07.03.2001
(73) Patentinhaber: Grammelsberger, Axel, 63110 Rodgau (DE)
(72) Erfinder: BEISSNER, Walter, D-31737 Rinteln (DE)
(74) Vertreter: Katscher Habermann Patentanwälte
(86) Internationale Anmeldenummer: PCT/DE2000/000456
(87) Internationale Veröffentlichungsnummer: WO 2000/048738

(56) Entgegenhaltungen:
- WO-A-95/05230
- WO-A-99/02237
- US-A- 1 953 672
- US-A- 2 071 617
- US-A- 4 033 863
- US-A- 4 038 178
- US-A- 4 039 433
- US-A- 5 611 363

## Beschreibung

Die Erfindung betrifft ein Verfahren zur Separation von aus organischem und anorganischem Material zusammengesetzten Feststoffen aus einer mit Feststoffen vermischten Flüssigkeit und zur Abtrennung des anorganischen Materials aus dem Gemisch von organischem und anorganischem Material. Die Erfindung betrifft ferner eine Vorrichtung zur Durchführung des Verfahrens.

In Abwasserbehandlungsanlagen fallen beim Klärprozeß verschiedene Reststoffe an. Einer dieser Reststoffe ist eine mit organischen und anorganischen Feststoffen vermischte Flüssigkeit aus dem Sandfang der Kläranlage. Das Mischungsverhältnis von organischem Material (Organik), anorganischem Material (Anorganik) und Flüssigkeit ist dabei insbesondere entsprechend den Einleitungsbedingungen in die Kläranlage und der Wirkungsweise des Sandfanges stark unterschiedlich.

Aus der AT-PS A1618/93 ist eine Vorrichtung zum Abscheiden von Sand aus mit Sand und organischen Stoffen beladenem Abwasser bekannt. Die Vorrichtung weist einen stehenden Behälter mit einem Überlauf für das mit organischen Stoffen belastete Abwasser auf. Der Behälter ist unten mit einem Behälterboden verschlossen, welcher über eine Austragsöffnung von geringer Größe verfügt. An die untere Austragsöffnung des Behälters ist ein Austragsförderer angeschlossen. Ferner weist der Behälter ein sich bis in den Bodenbereich erstrekkendes Rührwerk und im Bodenbereich eine Spülwasserzufuhr auf. Für den Antrieb des Austragsförderers ist eine Steuereinrichtung vorgesehen, die den Antrieb des Austragsförderers in Abhängigkeit von der Absetzhöhe des Sandes im Behälter steuert. Das Rührwerk weist eine Rührwelle auf, an der Rührarme angebracht sind und trägt oberhalb des Behälterbodens mit Austragsöffnung auf der Rührwelle eine Scheibe, die zum Behälterboden gering beabstandet ist und nach unten gegen den Behälterboden vorragende Rührfinger aufweist. Das mit Sand und organischen Stoffen verunreinigte Abwasser wird in den Behälter gepumt. Sand und organische Stoffe setzen sich entsprechend ihrer Dichte im Bodenbereich des Behälters ab. Mittels des Rührwerkes wird insbesondere die untere Absetzschicht aus Sand umgewälzt. Dabei reiben die Sandkörner aneinander und die organischen Bestandteile werden abgetrennt. Der Abtrennvorgang wird durch die Zugabe des Spülwassers unterstützt. Bei entsprechend großer Spülwassermenge können die spezifisch leichteren organischen Stoffe aus dem Behälter ausgeschwemmt werden. Hierbei besteht allerdings die Gefahr, daß auch Feinstsande mitgerissen werden, was unerwünscht ist. Durch das Rühren entsteht eine Sichtwirkung innerhalb der abgesetzten Stoffe. Die schwereren anorganischen Stoffe, wie Sand in unterschiedlicher Korngröße, sammeln sich unten. Die leichteren organischen Stoffe lagern sich darüber ab. Der Reinheitsgrad des Sandes steigt mit zunehmender Waschdauer durch Rühren unter Zugabe von Spülwasser. Mit geeigneten Meßverfahren wird die vorhandene Menge gereinigten Sandes erfaßt. Der abgesetzte Sand wird mittels des in die Vorrichtung integrierten Austragsförderers über das Wasserniveau des Behälters hinaus gefördert, dabei nachentwässert und anschließend in einen bereitstehenden Transportbehälter abgeworfen. Nachteilig bei der bekannten Vorrichtung ist, daß große Mengen an Spülwasser notwendig sind, um einen ausreichenden Auftrieb der abgetrennten organischen Stoffe zu bewirken. Außerdem ist die Spülwirkung nicht befriedigend. Ein weiterer Nachteil ergibt sich dadurch, daß der Behälter mit einem Behälterboden verschlossen ist und nur eine Austragsöffnung von geringer Größe aufweist, so daß hier Verstopfungen bei der Abführung des Sandes entstehen. Verstärkt wird diese Problematik durch die oberhalb der Austragsöffnung an der Rührwelle befindlichen Scheibe, welche einen großen Teil des Behälterquerschnittes ausfüllt und zum Behälterboden nur gering beabstandet ist. Der Sand muß von oben um die Scheibe herumgeleitet und dann unter ihr hindurchgeführt werden, um in die Austragsöffnung zu gelangen. Zudem führt im Sand enthaltener Kies zum Verklemmen zwischen Scheibe und Behälterboden. Insgesamt ist die bekannte Vorrichtung aufgrund ihrer mechanischen Wirkungsweise starkem Verschleiß unterworfen.

Der Erfindung liegt die Aufgabe zugrunde, ein verbessertes Verfahren und eine verbesserte Vorrichtung anzugeben, mit dem bzw. der aus organischem und anorganischem Material bestehende Feststoffe von einer Flüssigkeit separiert, aus dem Gemisch aus organischem und anorganischem Material anorganisches Material abgetrennt und soweit aufbereitet werden kann, daß es entsprechend den gesetzlichen Regelungen und Richtlinien einer Wiederverwertung zugeführt werden kann.

Diese Aufgabe wird verfahrensmäßig durch die Erfindung gemäß Anspruch 1 und vorrichtungsmäßig durch die Erfindung gemäß Anspruch 2 gelöst.

Vorteilhafte und zweckmäßige Weiterbildungen der Erfindungen sind in den Unteransprüchen angegeben.

Der Erfindung liegt die Erkenntnis zugrunde, daß in der Flüssigkeit Feststoffe aus organischem und anorganischem Material sowohl in freier als auch in vermischter Form enthalten sind und daß mehrere nacheinander ablaufende Verfahresschritte zur Separation der Feststoffe und zur Abtrennung von anorganischem Material daraus erforderlich sind. Es hat sich als zweckmäßig erwiesen, für die Durchführung des Erfindungsgedankens ein dreistufiges Verfahren anzuwenden, das durch die technischen Einrichtungen der Erfindung gezielt ermöglicht bzw. unterstützt wird.

Gegenüber bekannten Vorrichtungen kann die Menge an Spülwasser verringert werden, trotzdem aber eine ausreichende Spülwirkung erzielt und der Auftrieb des abgetrennten organischen Materials in geeigneter Weise unterstützt werden. Dabei wird ein Austragen von Feinstsanden mit der Flüssigkeit weitgehend verhindert. In allen Verfahrensschritten kann einsatzortbezogen individuellen Mischverhältnissen zwischen Organik, Anorganik und Flüssigkeit Rechnung getragen werden. Durch seine mechanische Wirkungsweise werden die Verschleißerscheinungen auf ein unvermeidbares Minimum begrenzt.

Das anorganische Material besteht nach Literaturangaben durchschnittlich zu ca. 90 % aus Sand und Ton. Die Bandbreite der Körnung hängt dabei sowohl von den geologischen Verhältnissen im Einzugsgebiet der Kläranlage, dem gewählten Entwässerungssystem (Misch- oder Trennsytem) und der dem Sandfang vorgeschalteten maschinentechnischen Einrichtung der mechanischen Abwasserreinigungsstufe ab. Im allgemeinen weist das anorganische Material eine Korngrößenverteilung von <0,1 mm (Feinstsand, Schluff) bis 8 mm Durchmesser (Kies) auf. Naturgemäß bildet der Rückhalt von Feinstsand in einem hydrolisierten Prozeß ein Problem von hohem Stellenwert. Die erfindungsgemäße Vorrichtung trägt dem sowohl durch ihre besonderen Ausbildungsmöglichkeiten als auch durch eine gezielt positionsbezogene und auf die einzelnen Verfahrensschritte ausgerichtete Hydraulik Rechnung.

Für die Durchführung des Verfahrens wird eine Vorrichtung konzipiert, die mindestens zwei übereinander angeordnete, runde Behälter unterschiedlicher Form und Größe umfaßt, welche miteinander verbunden sind. Der obere Behälter ist im wesentlichen konisch ausgebildet und so positioniert, daß sich sein kleinerer Durchmesser unten befindet. Der obere Behälter ist am unteren Durchmesser vollkommen offen. Er schließt durchmessergleich an den unteren Behälter an. Der untere Behälter ist an seinem oberen Durchmesser ebenfalls vollkommen offen und kann wahlweise gegenläufig konisch zum oberen Behälter oder zylindrisch ausgebildet sein. An seinem unteren Ende ist der untere Behälter direkt mit einem, unter einem Winkel von 40° - 60°, vorzugsweise 45°, schräg aufwärts gerichteten Austragsförderer verbunden. Ferner weist die Vorrichtung ein Rührwerk auf, das sich durch den oberen und den unteren Behälter erstreckt. Es beinhaltet mindestens drei Rührstufen mit jeweils mindestens einem, jeweils in Größe und/oder Ausführung unterschiedlichen Rührarm. Davon ist mindestens ein Rührarm in einer der Rührstufen propellerartig ausgeführt, wodurch eine Hebefunktion erzielt wird. Der obere Behälter wird verfahrenstechnisch in zwei Trennzonen (Wirbelbett und Wanderbett) eingeteilt. Im unteren Behälter befindet sich eine weitere Trennzone (Festbett). Zur Verringerung des Spülwasserverbrauches ist eine gezielte Spülwasserzugabe in die einzelnen Trennzonen vorgesehen, die individuell auf den jeweiligen Spülwasserbedarf dieser Trennzonen einregelbar ist. Dazu werden außen an den beiden Behältern in den Bereichen der jeweiligen Trennzonen jeweils mindestens zwei Spülwasseranschlüsse positioniert. Zusätzlich kann bedarfsweise im Innenbereich der Trennzone des unteren Behälters Spülwasser rotativ verteilt werden, das über mindestens einen, in diesem Bereich befindlichen Rührarm aus der Rührwelle zugeführt wird.

Die gegenläufige konische Ausbildungsform des unteren Behälters hat sich für den Rückhalt von Feinstsanden als besonders wirkungsvoll erwiesen, weil dessen Fluidisierung durch die sich nach oben verjüngende Behälterform stark eingeschränkt wird. Enthält das anorganische Material aus den oben bereits ausgeführten Gründen nur eine geringen Anteil Feinstsand, so kann der untere Behälter zylindrisch ausgeführt werden, was sich kostenmindernd auf die Herstellung der Vorrichtung auswirkt.

Die Erfindung soll nachfolgend anhand der beigefügten Zeichnungen, in denen ein Ausführungsbeispiel dargestellt ist, näher erläutert werden.

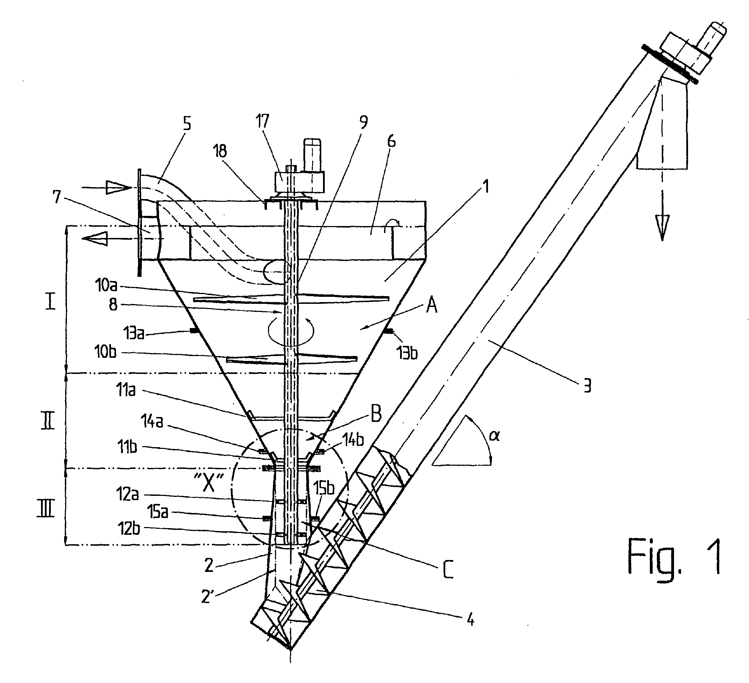

Es zeigt
- Fig. 1: schematisch eine Ausführungsform der erfindungsgemäßen Vorrichtung und

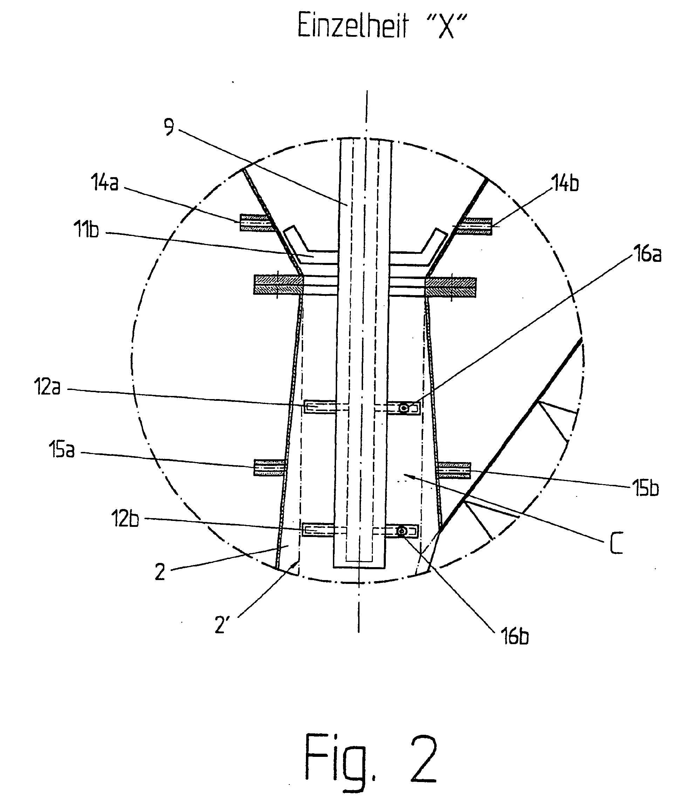

- Fig. 2: eine Einzelheit "x" der Vorrichtung nach Fig. 1 in vergrößerter Darstellung.

Gleiche Bauteile in den Figuren der Zeichnung sind mit gleichen Bezugszeichen versehen.

Die Zeichnung zeigt eine Vorrichtung zum Separieren von aus organischem und anorganischem Material zusammengesetzten Feststoffen aus einer mit Feststoffen vermischten Flüssigkeit und zur Abtrennung von anorganischem Material aus dem Gemisch von organischem und anorganischem Material mit einem ersten konischen, oberen Behälter 1, dessen kleiner Durchmesser sich unten befindet und vollkommen offen ist. An den Behälter 1 schließt sich unten durchmessergleich ein weiterer Behälter 2 an. Behälter 2 ist gegenläufig konisch zu dem ersten Behälter 1 ausgebildet. Sein oberer Durchmesser ist ebenfalls vollkommen offen. An seinem unteren Ende ist der Behälter 2 direkt mit einem unter einem Winkel α von 40° bis 60°, vorzugsweise 45°, schräg aufwärts gerichteten Feststoffförderer 3 mit einer Förderwendel 4 verbunden.
Wahlweise kann der Behälter 2 zylindrisch (strich-punktierte Darstellung 2') ausgebildet sein. Der Behälter 1 besitzt oben einen tangentialen Zulauf 5, eine Überlaufschwelle 6 und einen Ablauf 7.

In beide Behälter 1 und 2 bzw. 2' ragt von oben ein motorisch angetriebenes mindestens drei Rührstufen A, B und C aufweisendes Rührwerk 8, welches aus einer Rührwelle 9 und an dieser angeordneten, die drei Rührstufen A, B, und C bildenden Rührarme 10a, 10b, 11a, 11b und 12a, 12b besteht, die unterschiedlich gestaltet sind in ihrer Größe und/oder Ausführung. Mindestens ein Rührarm 10a, 10b der ersten Rührstufe A ist propellerartig ausgeführt, wodurch eine Hebewirkung erzielt wird.

Die Rührwelle 9 ist zentrisch im ersten Behälter 1 einseitig an dessen Oberseite in einem Antriebsmotor 17 gelagert. Der Antriebsmotor 17 wird von einer über den Behälter 1 reichenden Traverse 18 getragen. Am unteren Ende wird die Rührwelle 9 mit den Rührarmen 12a, 12b im Behälter 2 bzw. 2' zentriert.

Entsprechend dem verfahrenstechnischen Ablauf für die Separierung des Feststoffgemisches aus der Flüssigkeit und die Abtrennung von anorganischem Material aus dem Feststoffgemisch sind drei Trennzonen I, II und III vorgesehen. Die Trennzonen sind nacheinander von oben nach unten angeordnet. Die Trennzonen I und II befinden sich im ersten Behälter 1, die Trennzone III im zweiten Behälter 2 bzw. 2'.

In die Trennzonen I, II und III wird von außen Spülwasser jeweils über mindesten zwei Spülwasserdüsen 13a, 13b, 14a, 14b und 15a, 15b eingeführt. Zusätzlich kann in den Innenbereich von Trennzone III über mindestens einen Rührarm 12a, 12b der Rührstufe C Spülwasser rotativ verteilt werden. Dazu wird die Rührwelle 9 als Hohlwelle ausgeführt. Das obere Ende ist offen, das untere geschlossen. Von den Rührarmen 12a, 12b in Rührstufe C ist mindestens ein Rührarm ebenfalls hohl. Sein Hohlraum steht mit dem Hohlraum der Rührwelle 9 in Verbindung. An ihren äußeren Enden sind die Rührarme 12a, 12b verschlossen. Auf der, der Drehrichtung des Rührwerks abgewandten Seite trägt mindestens einer der Rührarme 12a, 12b eine Düse 16a, 16b. Das Spülwasser wird am oberen Ende der Rührwelle 9 zugeführt und tritt durch mindestens eine Düse 16a, 16b wieder aus, wo es durch die Rotationsbewegung des Rührwerks 8 im Innenbereich der Trennzone III umlaufend verteilt wird.

In den Behälter 1 wird über den Zulauf 5 eine mit aus organischem und anorganischem Material zusammengesetzten Feststoffen vermischte Flüssigkeit tangential eingeleitet. Dabei befindet sich das Rührwerk 8 in Rotation. Seine propellerartigen Rührarme 10a, 10b der Rührstufe A erzeugen in der Trennzone I des Behälters 1 eine aus unterschiedlichen Richtungskomponenten zusammengesetzte turbulente Strömung, ein sogenanntes Wirbelbett. Infolge der Zyklonwirkung des konischen Behälters 1 mit dem tangentialen Zulauf 5 werden die spezifisch schweren anorganischen Feststoffe, welche zum größten Teil mit organischen Feststoffen verklebt sind und größere Verklumpungen organischer Feststoffe von der Flüssigkeit abgetrennt. Spezifisch leichtere, ungebundene Organikteilchen werden dagegen durch die turbulente Strömung des Wirbelbetts in der Trennzone I am Absetzen gehindert und zusammen mit der Flüssigkeit über den Überlauf 6 und den Ablauf 7 aus dem Behälter 1 abgeleitet. Bedarfsbezogen kann durch eine Spülwasserzugabe aus den Spülwasserdüsen 13a, 13b in die Trennzone I die Auftriebswirkung feingesteuert werden.

Die aus organischem und anorganischem Material zusammengesetzten Feststoffe sedimentieren in der Trennzone II des Behälters 1. Mit Hilfe der Rotation des Rührwerkes 8, seinen Rührarmen 11a, 11b der Rührstufe B und unter gezielter, regulierbarer Zugabe von Spülwasser aus den Spüldüsen 14a, 14b bilden die Feststoffe in der Trennzone II ein sogenanntes Wanderbett, daß heißt sie befinden sich in einem Übergangszustand zwischen absetzen und auftreiben. Im Wanderbett werden die Feststoffe in Bewegung gehalten. Dabei reiben sie aneinander, so daß organische Bestandteile vom anorganischen Material abgetrennt und organische Verklumpungen weitgehend zerkleinert werden. Infolge der sich ergebenden Sichtwirkung wandern die spezifisch schwereren anorganischen Feststoffe in der Trennzone II nach unten, wogegen sich die spezifisch leichteren organischen Feststoffe, auch unterstützt durch die gezielte Spülwasserzugabe aus den Spülwasserdüsen 14a, 14b, darüber schichten. Sobald die Schichtung der organischen Feststoffe soweit angewachsen ist, daß sie von dem Wirbelbett der Trennzone I erfaßt werden können, werden die organischen Feststoffe aufgetrieben und mit dem Spülwasser über den Überlauf 6 und den Ablauf 7 aus dem Behälter 1 abgeleitet. Das anorganische Material wird verfahrensgemäß in der Trennzone II nur teilweise von anhaftendem organischen Material befreit, was durch den vergleichsweise hohen Anteil organischen Materials im Feststoffgemisch bedingt ist. Es findet gewissermaßen eine Vorwäsche und eine Vorsortierung der organischen und anorganischen Feststoffe statt.

Der Behälter 2 bzw. 2' ist mit der Trennzone III und der Rührstufe C so bemessen, daß bei dessen Durchlauf noch vorhandenes organisches Material unter Rotation des Rührwerkes 8 und gezielter, regulierbarer Zugabe von Spülwasser über die Spüldüsen 15a, 15b sowie bedarfsweiser, rotativer Verteilung von Spülwasser aus mindestens einer Spülwasserdüse 16a, 16b im Innenbereich der Trennzone III, so weit vom anorganischen Material abgetrennt wird, daß der anorganische Feststoffanteil beim Austritt aus dem Behälter 2 bzw. 2' >97 % (gemessen Glührückstand) beträgt. Dazu bilden die Feststoffe im Bereich der Trennzone III ein sogenanntes gerührtes Festbett, daß heißt die Feststoffe sind in einem hohen Prozentsatz abgesetzt, werden aber durch die Rührwirkung der Rührstufe C umgewälzt. Das abgetrennte, spezifisch leichtere organische Material wird dabei wiederum infolge der Sichtwirkung in Verbindung mit der Spülwirkung nach oben verdrängt und zusammen mit dem Spülwasser durch die Trennzone II in die Trennzone I ausgetragen, wo beides den Behälter 1 über den Überlauf 6 und den Ablauf 7 verläßt.

Die gereinigten anorganischen Feststoffe weisen einen als Glührückstand gemessenen Reinheitsgrad von > 97 % auf und werden mit der Förderwendel 4 bedarfsbezogen, diskontinuierlich am unteren Ende des Behälters 2 bzw. 2' abgezogen, zum Abwurf des Feststoffförderers 3 transportiert und einem bereitstehenden Behältnis zugeführt. In dem Maße, wie gereinigte, anorganische Feststoffe unten aus dem Behälter 2 bzw. 2' abgezogen werden, wird vorgereinigtes organisches und anorganisches Material aus der Trennzone II des Behälters 1 oben in die Trennzone III des Behälters 2 bzw. 2' nachgeführt.

## Patentansprüche

1. Verfahren zur Separation von aus organischem und anorganischem Material zusammengesetzten Feststoffen aus einer mit Feststoffen vermischten Flüssigkeit und zur Abtrennung von anorganischem Material aus dem Gemisch von organischem und anorganischem Material, **dadurch gekennzeichnet, daß** die Flüssigkeit mit den aus organischem und anorganischem Material zusammengesetzten Feststoffen einem dreistufigen Separations- und Abtrennungsprozeß dergestalt unterzogen wird, daß
- Verklumpungen organischer Feststoffe und anorganische Feststoffe, die zum Teil mit organischen Fest stoffen verklebt sind, in einer ersten Trennzone mit einer ersten Rührstufe von der Flüssigkeit separiert werden,
- die Flüssigkeit mit darin enthaltenen, spezifisch leichteren organischen Feststoffen abgeleitet wird,
- die aus organischem und anorganischem Material zusammengesetzten Feststoffe danach in einer zweiten Trennzone mit einer zweiten Rührstufe zum Sedimentieren gebracht werden,
- die Feststoffe durch die zweite Rührstufe und unter Zugabe von Spülwasser in die zweite Trennzone in einem Übergangszustand zwischen Festbett und Wirbelbett, einem sogenannten Wanderbett gehalten werden, derart, daß eine Attritionswirkung in den Feststoffen erzeugt wird, mit deren Hilfe organische Verklumpungen aufgelöst und organische Anhaftungen von anorganischen Feststoffen größtenteils abgelöst werden und gleichzeitig eine Sichtwirkung entsteht, bei der die spezifisch schwereren anorganischen Feststoffe in den unteren Teil der Trennzone wandern und sich die spezifisch leichteren organischen Feststoffe darüber schichten, bis sie von dem in der ersten Trennzone durch die erste Rührstufe erzeugten Wirbelbett erfaßt und zusammen mit Spülwasser abgeleitet werden,
- vorgereinigte anorganische Feststoffe mit organischen Restanhaftungen aus der zweiten Trennzone in eine dritte Trennzone geführt werden, zur Bildung eines bewegten Festbettes, in dem durch Rühren und unter Zugabe von Spülwasser infolge der hier ebenfalls erzeugten Attritionswirkung weiteres organisches Material von den anorganischen Feststoffen abgelöst wird, welches aufgrund der geringeren Dichte mit dem Spülwasser aufsteigt und über die zweite Trennzone in die erste Trennzone gelangt,
- das organische Material zusammen mit dem Spülwasser abgeleitet wird,
- die anorganischen Feststoffe auf ihrem Weg durch die dritte Trennzone von weiteren organischen Anhaftungen befreit werden,
- die gereinigten anorganischen Feststoffe bedarfsbezogen diskontinuierlich abgeleitet werden.

2. Vorrichtung zur Durchführung des Verfahrens nach Anspruch 1 mit mindestens zwei übereinander angeordneten runden Behältern unterschiedlicher Form und Größe, wobei ein erster oberer Behälter einen tangentialen Zulauf für mit aus organischem und anorganischem Material zusammengesetzten Feststoffen vermischte Flüssigkeit, einen Überlauf und einen Ablauf aufweist und ein zweiter unterer Behälter in einen Feststoffförderer mündet, **dadurch gekennzeichnet, daß** der erste obere Behälter (1) im wesentlichen konisch ausgeführt und so positioniert ist, daß sich sein kleinerer, vollkommen offener Durchmesser unten befindet und daran der zweite untere Behälter (2) durchmessergleich und ebenfalls vollkommen offen anschließt, daß in beide Behälter (1) und 2) von oben ein Rührwerk (8) ragt und daß der erste Behälter (1) in die erste obere Trennzone (I) und eine sich darunter anschließende zweite Trennzone (II) aufgeteilt ist und im zweiten Behälter (2) eine dritte Trennzone (III) vorgesehen ist, die sich an die zweite Trennzone (II) anschließt und in welche von außen bedarfsbezogen jeweils über mindestens zwei Spüldüsen (13a, 13b), (14a, 14b) und (15a, 15b) unter Druck stehendes Spülwasser in regulierbarer Menge zuführbar ist.

3. Vorrichtung nach Anspruch 2, **dadurch gekennzeichnet, daß** der untere, zweite Behälter (2) gegenläufig konisch zum ersten Behälter (1) ausgebildet ist.

4. Vorrichtung nach Anspruch 2, **dadurch gekennzeichnet, daß** der untere, zweite Behälter (2') zylindrisch ausgebildet ist.

5. Vorrichtung nach einem der Ansprüche 2 bis 4, **dadurch gekennzeichnet, daß** das Rührwerk (8) an seiner Rührwelle (9) mindesten drei Rührstufen (A), (B) und (C) aufweist, die von mindestens je einem, in Größe und/oder Ausführung unterschiedlichen Rührarm (10a, 10b), (11a, 11b) und (12a, 12b) gebildet werden, daß wenigstens ein Rührarm (10a, 10b) der ersten Rührstufe (A) propellerartig ausgeführt ist, und daß die beiden ersten Rührstufen (A) und (B) im ersten Behälter (1), und die dritte Rührstufe (C) im zweiten Behälter (2) bzw. (2') angeordnet sind.

6. Vorrichtung nach Anspruch 5, **dadurch gekennzeichnet, daß** die Rührwelle (9) des Rührwerkes (8) hohl und am unteren Ende verschließbar ausgebildet ist, daß mindestens ein Rührarm (12a, 12b) der dritten Rührstufe (C) ebenfalls hohl ausgebildet und an seinen äußeren Enden verschließbar ausgebildet ist, wobei die Hohlräume der Rührwelle (9) und des Rührarmes (12a, 12b) miteinander in Verbindung stehen, und daß der Rührarm (12a, 12b) auf der der Drehrichtung des Rührwerkes (8) abweisenden Seite mindestens eine Düse (16a, 16b) aufweist, durch die bedarfsweise unter Druck stehends Spülwasser in regulierbarer Menge von außen in den inneren Bereich der dritten im zweiten Behälter (2) bzw. (2') befindlichen Trennzone (III) zuführbar ist.

7. Vorrichtung nach Anspruch 5, **dadurch gekennzeichnet, daß** die Rührwelle (9) des Rührwerkes (8) mit mindestens einem seiner Rührarme (12a, 12b) im zweiten Behälter (2) bzw. (2') selbstzentrierend ausgebildet ist.

8. Vorrichtung nach Anspruch 2, **dadurch gekennzeichnet, daß** der Feststoffförderer (3) einen Aufstellwinkel (α) von 40° bis 60°, vorzugsweise 45°, aufweist.

## Claims

1. Method for separating solids composed of organic and inorganic material from a liquid mixed with solids, and for removing inorganic material from the mixture of organic and inorganic material, **characterized in that** the liquid with the solids composed of organic and inorganic material is subjected to a three-stage separation and removal process such that
- clumps of organic solids and inorganic solids, which partly adhere to organic solids, are separated from the liquid by a first stirring stage in a first separation zone,
- the liquid with lower-density organic solids contained in it is discharged,
- the solids composed of organic and inorganic material are subsequently caused to sediment by a second stirring stage in a second separation zone,
- by the second stirring stage and with the addition of wash water into the second separation zone, the solids are kept in a transition state between a fixed bed and a fluidized bed, i.e. a so-called migrating bed, so that an attrition effect is generated in the solids with the aid of which organic clumps are disintegrated and organic adhesions are for the most part released from inorganic solids, and a visual effect is simultaneously created in which the higher-density inorganic solids migrate into the lower part of the separation zone and the lower-density organic solids become layered above, until they are captured by the fluidized bed generated by the first stirring stage in the first separation zone and discharged together with wash water,
- pre-purified inorganic solids with residual organic adhesions are fed from the second separation zone into a third separation zone in order to form a mobile fixed bed in which, by stirring and addition of wash water, further organic material is released from the inorganic solids because of the attrition effect likewise generated here, rises with the wash water owing to the lower density and reaches the first separation zone via the second separation zone,
- the organic material is discharged together with the wash water,
- the inorganic solids are freed from further organic adhesions on their way through the third separation zone,
- the purified inorganic solids are discharged discontinuously according to requirements.

2. Device for carrying out the method according to Claim 1, having at least two round containers of different shapes and sizes arranged above one another, in which an upper first container has a tangential feed for liquid mixed with solids composed of organic and inorganic material, an overflow and a discharge, and a lower second container opens into a solids transporter, **characterized in that** the upper first container (1) is essentially designed conically and positioned so that its smaller, fully open diameter lies underneath and the lower second container (2) follows on therefrom with an equal diameter and likewise fully open, **in that** a stirring mechanism (8) extends into the two containers (1 and 2) from above and **in that** the first container (1) is divided into an upper first separation zone (I) and a second separation zone (II) following on underneath and a third separation zone (III) is provided in the second container (2), which follows on from the second separation zone (II) and into which pressurized wash water can be fed according to requirements in a controllable quantity from the outside, respectively via at least two washing nozzles (13a, 13b), (14a, 14b) and (15a, 15b).

3. Device according to Claim 2, **characterized in that** the lower second container (2) is conically designed oppositely to the first container (1).

4. Device according to Claim 2, **characterized in that** the lower second container (2') is cylindrically designed.

5. Device according to one of Claims 2 to 4, **characterized in that** the stirring mechanism (8) comprises at least three stirring stages (A), (B) and (C) on its stirring shaft (9), which are respectively formed by at least one stirring arm (10a, 10b), (11a, 11b) and (12a, 12b) differing in size and/or design, **in that** at least one stirring arm (10a, 10b) of the first stirring stage (A) is designed in propeller fashion, and **in that** the first two stirring stages (A) and (B) are arranged in the first container (1) and the third stirring stage (C) is arranged in the second container (2) or (2').

6. Device according to Claim 5, **characterized in that** the stirring shaft (9) of the stirring mechanism (8) is designed to be hollow and closable at the lower end, **in that** at least one stirring arm (12a, 12b) of the third stirring stage (C) is likewise designed to be hollow and closable at its outer ends, the cavities of the stirring shaft (9) and of the stirring arm (12a, 12b) being in communication or with one another, and **in that** the stirring arm (12a, 12b) has at least one nozzle (16a, 16b) on the side facing away from the rotation direction of the stirring mechanism (8), by which pressurized wash water can be fed according to requirements in a controllable quantity from the outside into the inner region of the third separation zone (III) lying in the second container (2) or (2').

7. Device according to Claim 5, **characterized in that** the stirring shaft (9) of the stirring mechanism (8) is designed with at least one of its stirring arms (12a, 12b) to be self-centring in the second container (2) or (2').

8. Device according to Claim 2, **characterized in that** the solids transporter (3) has a standing angle (α) of from 40° to 60°, preferably 45°.

## Revendications

1. Procédé de séparation de solides constitués d'un matériau organique et d'un matériau minéral par rapport à un liquide mélangé aux solides, et de séparation du matériau minéral du mélange de matériau organique et de matériau minéral, **caractérisé en ce que** le liquide mélangé aux solides constitués de matériau organique et de matériau minéral subit une opération de séparation en trois étapes constituée des étapes suivantes :
- dans une première zone de séparation, les agrégats de solides organiques et de solides minéraux qui sont en partie collés aux solides organiques sont séparés du liquide à l'aide d'un premier étage de brassage,
- le liquide qui contient des solides organiques moins denses est évacué,
- les solides constitués de matériau organique et de matériau minéral sont ensuite amenés à sédimenter dans une deuxième zone de séparation dotée d'un deuxième étage de brassage,
- par addition d'eau de lavage dans la deuxième zone de séparation, les solides qui traversent le deuxième étage de brassage sont maintenus dans un état intermédiaire entre un lit fixe et un lit fluidisé, à savoir en lit dit progressif, de manière à créer dans les solides un effet d'attrition à l'aide duquel les agrégats organiques sont désagrégés et les dépôts organiques présents sur les solides minéraux sont en très grande partie désagrégés, pour obtenir en même temps un effet de classification par lequel les solides minéraux de plus grande densité se rendent dans la partie inférieure de la zone de séparation et les solides organiques moins denses se déposent par-dessus jusqu'à être repris dans le lit fluidisé créé par le premier étage de brassage dans la première zone de séparation et sont évacués en même temps que l'eau de lavage,
- les solides minéraux pré-épurés, qui présentent des dépôts organiques résiduels et qui proviennent de la deuxième zone de séparation sont amenés dans une troisième zone de séparation pour former un lit fixe en déplacement dans lequel, par brassage et avec addition d'eau de lavage, grâce à l'effet d'attrition qui y est également créé, davantage de matériau organique est détaché des solides minéraux et, du fait de sa plus petite densité, remonte avec l'eau de lavage et passe dans la première zone de séparation après avoir traversé la deuxième zone de séparation,
- le matériau organique est évacué en même temps que l'eau de lavage,
- les solides minéraux sont débarrassés des autres dépôts organiques lors de leur parcours à travers la troisième zone de séparation et
- les solides minéraux épurés sont évacués de manière discontinue et en fonction des besoins.

2. Dispositif de mise en oeuvre du procédé selon la revendication 1, qui présente au moins deux récipients ronds de taille et de forme différentes disposés l'un au-dessus de l'autre, un premier récipient supérieur présentant une amenée tangentielle d'un liquide mélangé avec des solides constitués de matériau organique et de matériau minéral, une surverse et une évacuation, un deuxième récipient inférieur débouchant dans un dispositif de transport de solides, **caractérisé en ce que** le premier récipient supérieur (1) est essentiellement conique et est disposé de telle sorte que son petit diamètre entièrement ouvert soit situé dans le bas et se raccorde au deuxième récipient inférieur (2) de même diamètre et éventuellement entièrement ouvert, **en ce qu'**un mécanisme de brassage (8) pénètre par le haut dans les deux récipients (1 et 2), **en ce que** le premier récipient (1) est divisé en une première zone supérieure de séparation (I) et une deuxième zone de séparation (II) qui s'y raccorde par-dessous et **en ce que** dans le deuxième récipient (2) est prévue une troisième zone de séparation (III) qui se raccorde à la deuxième zone de séparation (II) et dans laquelle de l'eau de lavage sous pression peut être apportée de l'extérieur en quantité régulable en fonction des besoins par au moins deux ajutages de lavage (13a, 13b), (14a, 14b) et (15a, 15b).

3. Dispositif selon la revendication 2, **caractérisé en ce que** le deuxième récipient inférieur (2) a une configuration conique inverse de celle du premier récipient (1).

4. Dispositif selon la revendication 2, **caractérisé en ce que** le deuxième récipient inférieur (2') a une configuration cylindrique.

5. Dispositif selon l'une des revendications 2 à 4, **caractérisé en ce que** sur son arbre de brassage (9), le mécanisme de brassage (8) présente au moins trois étages de brassage (A), (B) et (C) qui sont formés chacun d'au moins un bras de brassage (10a, 10b), (11a, 11b) ou (12a, 12b) de taille et/ou de forme différentes, **en ce qu'**au moins un bras de brassage (10a, 10b) du premier étage de brassage (A) est configuré en forme d'hélice et **en ce que** les deux premiers étages de brassage (A) et (B) sont disposés dans le premier récipient (1) et le troisième étage de brassage (C) dans le deuxième récipient (2) ou (2').

6. Dispositif selon la revendication 5, **caractérisé en ce que** l'arbre de brassage (9) du mécanisme de brassage (8) est creux et peut être fermé à son extrémité inférieure, **en ce qu'**au moins un bras de brassage (12a, 12b) du troisième étage de brassage (C) est également creux et peut être fermé à son extrémité extérieure, les espaces creux de l'arbre de brassage (9) et du bras de brassage (12a, 12b) communiquant l'un avec l'autre, et **en ce que** sur son côté non tourné dans le sens de rotation du mécanisme de brassage (8), le bras de brassage (12a, 12b) présente un ajutage (16a, 16b) par lequel l'eau de lavage sous pression peut être apportée de l'extérieur en quantité régulable en fonction des besoins dans la partie intérieure de la troisième zone de séparation (III) située dans le deuxième récipient (2) ou (2').

7. Dispositif selon la revendication 5, **caractérisé en ce que** l'arbre de brassage (9) du mécanisme de brassage (8) avec au moins ses bras de brassage (12a, 12b) présents dans le deuxième récipient (2) ou (2') est autocentré.

8. Dispositif selon la revendication 2, **caractérisé en ce que** le dispositif (3) de transport de solides présente un angle de pose (α) de 40° à 60° et de préférence de 45°.
